# EUROPEAN PATENT SPECIFICATION

(11) **EP 3 595 839 B1**
(45) Date of publication and mention of the grant of the patent: **25.06.2025**
(21) Application number: 18713021.6
(22) Date of filing: 15.03.2018
(51) Int. Cl.: B08B 7/00

(54) **HANDHELD PULSED LASER DEVICE FOR CLEANING OR TREATING A SURFACE**
HANDHALTBARE PULSLASERVORRICHTUNG ZUR REINIGUNG ODER BEHANDLUNG EINER OBERFLÄCHE
DISPOSITIF À LASER PULSÉ PORTATIF POUR LE NETTOYAGE OU LE TRAITEMENT D'UNE SURFACE

(30) Priority: 15.03.2017 NL 2018518
(43) Date of publication of application: 22.01.2020
(73) Proprietor: P-Laser N.V., 3550 Heusden Zolder (BE)
(72) Inventor: PHILIPPRON, Jean Claude Marie, 3550 Zolder (BE)
(74) Representative: EP&C
(86) International application number: PCT/IB2018/051747
(87) International publication number: WO 2018/167712

(56) References cited:
- WO-A1-2008/118365
- DE-A1- 102014 117 157
- US-A- 5 916 461
- US-A1- 2007 000 885
- US-A1- 2013 120 740
- US-A1- 2015 076 125

## Description

The present invention relates to a pulsed laser device, for cleaning or treating a surface; in particular configured to remove contaminants, such as oxides, organic material, inorganic material or weld traces from the surface. The invention further relates to a method for cleaning or treating a surface.

Laser cleaning devices are known in the art, for example from US 5,948,172.This US patent discloses a laser cleaning device, comprising a laser source and optical elements, which together project a laser beam on a surface to-be-cleaned. The heat input of the laser onto the surface is configured to vaporize a top layer of the surface, such as an oxide, organic or inorganic layer on a metal strip or on a non-metal strip.

Additionally, oxidation of the contaminant surface layer may occur, which is driven by the local heat input of the laser.

To improve cleaning speed, the projected laser beam is rapidly scanned along the surface to-be-cleaned, such that the effective cleaning beam is no longer a small point, but becomes a one-dimensional laser line across the surface.

Additionally, by rapid scanning, the amount of heat input by the laser into the surface is minimized, since each point on the surface becomes illuminated for a shorter period of time. This will prevent a high amount of heat to be directed into the surface, thereby preventing damage to underlying, non-contaminant material.

Despite the fact that a cleaning device with such a line-shaped laser beam will achieve good cleaning properties for flat surfaces, and in particular when the laser device is a stationary device, it has been found that the cleaning may not be sufficient for the cleaning of three-dimensional surfaces. The laser cleaning may furthermore not be sufficient when it were to be applied with a handheld laser cleaning device.

An example of an application in which three-dimensional surfaces are to be cleaned would be moulds, for example moulds that are used for forming glass bottle, plastic bottles or rubber products, of which an inner moulding surface becomes contaminated with an oxide layer or organic deposits after repeated usage.

Other devices for cleaning a surface by means of a laser beam are known from US 2015/0076125 A1, in which the device comprises at least one rotatable prism for scanning the beam along the surface in a two-dimensional, fixed substantially circular pattern. However, this circular pattern is not adaptable to a large extent, since, for example, a radius of the projected circular pattern remains constant.

Another device for projecting a laser beam on a surface, and scanning the beam across this surface in two dimensions, is known from US 5,916,461. This device is configured to scan the beam using two rotatable mirrors, which are arranged at a fixed location, in order to obtain a sandblasting-like effect by damaging of the surface. However, this device for obtaining the sandblasting-like effect will not be able to reach the scanning speeds that are required for laser cleaning purposes. This system furthermore comprises a control computer that is configured to control the beam only on the basis of a random particle distribution and on the basis of laser settings that remain constant during the process of the damaging of the surface.

WO2008118365A1 discloses a coating removal apparatus which removes a coating from a surface. The apparatus has a movable scanning head and scanning optics. The scanning head is movable in one dimension, and the scanning optics adjust in two dimensions to compensate for movement of the scanning head to implement long range scanning with a scanning pattern. Further, a surface roughness is determined by measuring specular and scattered reflections at various angles. For composite surfaces, the apparatus utilizes UV laser radiation and a controlled atmosphere to remove coating and alter the chemical characteristics at the surface.

It is an object of the invention to provide a pulsed laser device that lacks at least one of the above-mentioned disadvantages, or at least to provide an alternative pulsed laser device.

The invention provides a handheld pulsed laser device for cleaning or treating a surface, comprising:
- a laser source, configured to emit a pulsed laser beam,
- a focal distance adjuster, configured to change a focal distance of the beam, and
- a beam deflector, configured to deflect the beam to scan the beam along the surface, characterized in that, the device further comprises:
- at least one sensor, configured to provide a sensor signal, representative for a parameter that is related to a characteristic of the surface, and
- a control unit, configured to control the beam deflector to scan the beam along the surface in an, at least, two-dimensional pattern, based on the sensor signal and wherein, during cleaning or treating of the surface, the focal distance adjuster is configured to, upon control by the control unit, periodically vary the focal distance of the beam around a measured relative distance between the device and the surface.

It has been found that, with the handheld pulsed laser device according to the present invention, improved surface cleaning or treating effects may be achieved, as a result of the projected pattern on the surface. The handheld pulsed laser device is configured to not influence the surface underneath the contaminant layer significantly and, in particular, to not damage the surface. This may be achieved by accurate controlling of the energy density of the laser beam on the surface, e.g. the amount of laser energy per unit of surface area, because when this energy density is kept below a certain threshold value and when the energy is spread across the surface that is to be cleaned, only the top contaminant layer of the surface will be influenced, for example oxidized or disattached because of localized thermal stresses, while the non-contaminant layer underneath will remain intact.

The handheld pulsed laser device is in particular convenient for the cleaning of complex three-dimensional pieces, such as moulds or non-flat surfaces, for example being corroded. The handheld device thereby provides an advantage over the above-mentioned stationary devices, because it can be manually operated by an operator, which is favourable to clean relatively small one-off surfaces. This opposed to the above-mentioned devices, which require programming of the device to move the laser along the surface and to clean the surfaces.

With handheld, it is meant that the device at least comprises a handheld part, in particular a handheld part from which the laser beam is projected. The handheld part may, for example, be a torch-like part which can be handled by an operator. The handheld pulsed laser cleaning device may therefore comprise a second part, in which for example the laser source may be arranged, which does not need to be handheld in order to achieve the advantageous effects of the present invention.

The present device is configured to scan the beam along the surface, and to project the beam thereon, in a two-dimensional pattern. The scanning speed that is required to achieve the improved cleaning or treating effects, in prior art laser cleaning devices, not yet reachable.

The two-dimensional pattern, which is projected by the laser on the surface, is defined as any pattern for which the beam has been deflected in any vector combination of a first direction and a second direction, wherein the second direction is perpendicular to the first direction. The pattern may be pre-programmed in the control unit, preferably amongst other pre-programmed patterns, such that the operator may select the most appropriate scanning pattern for the specific task that has to be performed with the device. Preferably, the control unit comprises a selector device, which allows the operator to select the most appropriate scanning pattern.

The laser source is configured to emit a pulsed laser beam. With pulsed laser beam, it is understood that, instead of a continuously projected laser beam, the projection of the beam is intermitted during operation of the device. Due to the shortened illumination times of the beam on the surface, the heat input of the laser into the surface is reduced. This may limit the damage to sub-surface layers of the substrate to-be-cleaned, whereas a contaminant surface layer may be effectively removed.

The heat of laser pulses is generated in the substrate only for a short period of time. Surrounding substrate material, adjacent an impact point of the laser pulse on the surface, will remain relatively unheated. This is first caused by the low heat input, but, secondly, the dissipation of heat through the substrate material will be high as well. The generated heat in the impact point will thereby be swiftly spread throughout the surrounding material, so the sub-surface substrate material underneath the impact point will not be substantially heated either.

It is remarked that the laser beam of the device is configured to clean or to treat a surface, upon interaction with the surface. The embodiment that is described in the following is configured to clean the surface, by removing a contaminant layer on it. In alternative embodiments, the device may be configured to treat the surface, for example to engrave a pattern in the surface or to etch the surface.

The removal of the surface layer may be achieved by local heating thereof with the laser beam, resulting into a local temperature increase and vaporization of the surface layer. By setting a time interval between pulses, a pulse intensity and a distance on the substrate between consecutive pulses, a thorough cleaning of the surface, without damaging sub-surface layers, may be achieved.

The focal distance adjuster is configured to adjust a focal distance of the beam. The projected laser beam is focussed in the focal distance adjuster, such that at some point along a projection direction of the beam, a focal point is formed in which an energy density of the beam (energy per unit area of the beam projection) is the largest. In order to achieve an optimal cleaning effect, the focal point is preferably focussed onto the surface layer, to maximise the local heating there.

For changing the focal distance of the beam with the focal distance adjuster, the adjuster may comprise a movable optical element, such a movable lens. The lens may be of the converging type, to narrow an incoming laser beam, or of the diverging type, to widen an incoming laser beam. By changing a position of the movable optical element along the projection direction, a change in distance between the focal point and the laser source, and thus between the focal point and the laser cleaning device may be achieved. In an alternative embodiment, the focal distance may be adjusted by a tuneable lens.

In an embodiment of the device, the focal distance adjuster may comprise a plurality of movable optical elements. As such, the device may be configured to more accurately change the position of the focal point, as compared to when only a single movable optical element were to be used.

The scanning of the beam along the surface, which provides for the improved cleaning properties of three-dimensional surfaces, is achieved by the beam deflector. The beam deflector is arranged at least partially in the path of the beam, in order to deflect the beam and to change the projection direction of the beam.

For achieving a two-dimensional scanned pattern of the beam on the surface, the beam deflector is configured to change the projection direction of the beam along any linear combination of two perpendicular directions, which are aligned substantially parallel to the surface. The scanned pattern is preferably a pattern that allows for an even cleaning effect of the surface, to achieve that the surface is cleaned throughout. The scanned pattern is preferably not a random pattern, since random patterns have been found not to provide the desired even cleaning effect.

In an embodiment, the beam deflector comprises at least one movable mirror, which is arranged in the path of the beam. In order to deflect the beam in two dimensions, the deflector is tiltable around at least at least one perpendicular axis, preferably around two perpendicular axes.

In order to achieve the deflection of the laser beam in the beam deflector, other optical elements, such as lenses, may be provided as well, as an alternative for, or in addition to, the at least one movable mirror.

In an embodiment, the at least one movable mirror may be a single tiltable mirror, wherein the beam deflector comprises one or more actuators with which the mirror is tiltable around two perpendicular axes. Preferably, the single tiltable mirror comprises six actuators to change the orientation of the mirror with respect to the beam. An advantage thereof would be that the orientation of the mirror may be adapted along six degrees of freedom, comprising three displacement directions and rotation around three axes.

Alternatively, the at least one mirror may comprise two tiltable mirrors, of which a first one is tiltable around a first axis, and of which a second one is tiltable around a second axis, which is aligned perpendicular to the first axis. Each of the two tiltable mirrors may thereby comprise a single actuator, which is thereby configured to tilt the mirror.

The at least one movable mirror is generally a conventional flat mirror, but may, in an embodiment also be curved. Such a curved mirror may contribute to the focussing of the beam, in addition to the focussing of the beam that is provided by the focal distance adjuster.

The at least one sensor of the device is configured to measure a parameter that is related to a characteristic of the surface that is to be cleaned and to transmit a signal that is representative for the measured surface parameter. The sensor may be configured as well, to measure this surface parameter in relation to a parameter of the device. An example thereof would be a distance between a location of the surface and a location of the device,

The device may thereby be adapted to change one or more parameters of the laser beam that is projected on the surface, based on the measured surface parameter. By adapting the one or more parameters of the laser beam, based on the measured surface parameter, the cleaning or treating properties of the device may be improved and optimally adjusted for certain situations.

The device further comprises a control unit, with which the beam deflector is configured to be controlled, based on the measured sensor signal. As such, the control unit may be configured to control the beam deflector, and thereby allowing the beam to be scanned along the surface that is to be cleaned or treated.

The control unit is furthermore preferably configured to set the energy level of the beam, in order to achieve a desired energy density, e.g. amount of energy per unit of surface area, on the surface. The desired energy density is appropriate to achieve a suitable oxidation of the contaminants layer on the surface. The oxidation of the contaminants is, amongst others, a function of the energy density and of the oxygen content that is available at the surface. The oxygen content at the surface is generally a given value, but the energy density of the beam may be adjusted in order to achieve optimal oxidation of the contaminants.

The at least one sensor is, in an embodiment of the device, configured to provide a signal that is representative for the energy density of the beam on the surface. An example of a parameter that is representative for the energy density of the beam on the surface, which may be measured by the at least one sensor, can for example be a spectrum of light, having wavelengths that are for example in the UV regime of the can be the pitch and/or amplitude of a sound that is made by the interaction between the laser beam and the surface.

The control unit is thereby configured to compare the measured energy density with a desired energy density for the specific situation, for example based on the oxygen content. On the basis of the comparison, the control unit may adjust the energy of the beam in order to change the energy density of the beam on the surface, in order to achieve the optimal oxidation of the contaminants layer.

The at least one sensor may, finally, provide a signal towards the control unit, on the basis of which the control unit is configured to determine the effectivity of the cleaning process of the surface. Preferably, the control unit may be configured to determine the cumulative cleaning effectivity from the beginning of the cleaning of a particular surface to the end, when the cleaning process is being stopped.

The known laser cleaning devices were configured to scan a laser beam along a surface to-be-cleaned in a substantially one-dimensional pattern. In particular, the scanning direction of the laser beam was mainly aligned perpendicular to a direction of propagation of the entire device with respect to the substrate. This propagation was for example induced by means of manual movement of an operator, in case the device were to be handheld.

The device according to the invention, however, is configured to scan the beam along the surface in an, at least, two-dimensional pattern, based on the measured sensor signal. The beam may, according to the present invention, thus be scanned parallel to the direction of propagation of the device as well. Different to the known laser cleaning devices is that movement of the beam, parallel to the direction of propagation, no longer requires movement of the entire device, but may be also be facilitated when the device remains stationary with respect to the surface.

The scanning of the beam in a two-dimensional pattern provides the advantage that the heat input of the laser into the surface may be spread across the surface in two dimensions, instead of in only one dimension, as was the case for the known laser cleaning devices. The device according to the present invention may use higher energy laser pulses, since the heat is spread more across the scanned surface. This may allow for faster and more thorough cleaning of the surface.

In an embodiment, the pattern of the beam comprises an outer contour that is projected on the surface to-be-cleaned. During scanning of the beam, the outer contour is then filled-up by the beam with a back-and-forth scanning movement within the outer contour.

During scanning of the beam, the pattern is repeatedly projected, so after a first outer contour has been filled with the back-and-forth scanning movement, the laser beam is deflected so, that a second outer contour is projected onto the surface, which is in turn filled with a second back-an-forth scanning movement.

An overlap on the surface of two or more consecutive patterns with the laser beam, resulting into overlapping outer contours, may be facilitated to improve the cleaning effect of the device.

It has been found by the applicant that surfaces, in particular three-dimensional surfaces, can be cleaned very well with this type of pattern. This lies in the fact that the energy of the laser pulses may be set high, as the scanned contour is relatively large. Furthermore, the large scanned area provides the advantage that a propagation speed of the device, which is a relative velocity between the device and the substrate, may be high and/or irregular in direction and magnitude, which makes this scanned pattern very suitable for handheld laser cleaning devices.

In an embodiment, the scanned pattern is substantially circular. The outer contour of the pattern thereby is a circle, whereas the interior of the projected circle is filled with back-and-forth linear passes. These linear passes comprise a plurality of parallel lines, which are spaced from each other. A scanning direction of the linear passes may thereby be chosen in a first direction, whereas, between consecutive back-and-forth passes, the beam is moved in a second direction, perpendicular to the first direction.

In an alternative embodiment, a circular outer contour may be filled with a spiral pattern of the beam, converging to a centre point of the circular outer contour. In a further embodiment, the outer contour may as well be an ellipsoid or a rectangle, which may be filled with a back-and-forth linear scanning movement as well.

In a further embodiment, the scanned pattern comprises a sinusoidal of which the width is not equal to an exact plurality of a half wavelength of the sinusoid. This pattern is achieved by scanning the laser beam back and forth over the surface along a scanning width that is not equal to the exact plurality of the half wavelength of the sinusoid. As such, it is achieved that knot points of the pattern, in which subsequent back and forth scanning passes intersect, are not present at a fixed location on the surface, but that these knot points move along the surface, preferably over the entire scanning width. The energy density in the knot points is relatively large, when compared to any other location that is passed by the laser beam. By moving the high-energy knot points along the surface, the energy input into the surface is spread better, which allows the cleaning effect to be more even and to be better spread across the surface.

In an embodiment, the back-and-forth scanning movement of the laser beam is superpositioned with a sinusoidal pattern. This means that the back-and-forth scanning movement of the beam, with scanning passes in a first direction, further comprises an oscillatory movement of the beam. This sinusoidal oscillation may have an equilibrium axis that is aligned parallel to the first direction and an oscillation amplitude that is parallel to the second direction.

The local heating of the surface by the laser beam provides the advantage that a ripple stress may be induced in the surface layer that is to be removed. The ripple stress is induced by local heating of the surface layer for short periods of time, resulting in a local thermal expansion, which may spread throughout the surface layer as a shockwave. Surrounding material remains substantially unheated and does thus not suffer from thermal expansion. A compressive stress is induced in the thermally expanded portion of the surface layer, causing local buckling of the surface layer, which will result in local delamination of the surface layer.

By superpositioning of the movement of the beam with a sinusoidal pattern, the area in which ripple stresses are generated in the surface layer, is increased as compared to when the beam were only scanned along the surface in linear passes. In alternative embodiments, the back-and-forth scanning movement may not be superpositioned with a sinusoidal pattern, but with another pattern, such as a square wave pattern, or any other periodically oscillating pattern.

In an embodiment, the back-and-forth scanning movement is superpositioned with a spiral pattern. The application of such a spiral pattern, during cleaning of substrates, has been found to increase cleaning properties as well. When the spiral pattern is projected onto the surface, the linear passes of the laser on the surface are replaced by spiral passes, which are projected back-and-forth on the surface as well.

With the superposition of the sinusoidal pattern as described above, the beam was, besides the scanning passes in the first direction, oscillated in the second direction. Compared to this sinusoidal pattern, however, the superposition with a spiral pattern additionally comprises a simultaneous oscillation in the first direction during the scanning passes. The beam deflector is thus configured to provide a back-and-forth scanning movement of the beam in the first direction, as well as an oscillation of the beam in the first and in the second direction.

In a further embodiment, a random vibratory function may be superpositioned with the back-and-forth scanning movement, to further spread the heat input by the laser and/or to induce additional ripple stresses.

According to the invention, the control unit is configured to superimpose the two-dimensional projected pattern with a variation in the focal distance, for example with a sinusoidal variation in the focal distance. It is hereby achieved that surfaces, in particular three-dimensional surfaces, are cleaned more effectively, because the laser beam is not only scanned in the horizontal direction but also in a vertical direction, in order to compensate for height variations of the surface.

In an embodiment, the at least one sensor is a spectral analysis sensor, which is electronically connected to the control unit. The spectral analysis sensor is aimed towards the surface, preferably towards the impact point of the laser beam on the surface. The spectral analysis sensor may be arranged within, or near, any one of the laser source, the focal distance adjuster, the beam deflector or preferably the control unit. However, in an alternative embodiment, the spectral analysis sensor may be arranged, separate from any of the above elements of the laser cleaning device.

The spectral analysis sensor may be configured to provide a signal that is representative for an intensity, or a plurality of various intensities, of electromagnetic radiation that is emitted from the surface, as a result of the laser beam that is projected on the surface. Additionally, the spectral analysis may be configured to measure wavelength spectra of the emitted electromagnetic radiation.

The sensor signal from the spectral analysis sensor may furthermore comprise information on the energy density of the beam, e.g. the amount of energy per unit of surface area that is applied on the surface by the laser beam.

The sensor signal from the spectral analysis sensor may furthermore comprise information about the wavelength of the laser beam that is projected on the surface. The measured wavelength, and in particular the measured wavelength in the UV spectrum, comprises information on the focal distance of the beam on the surface.

The sensor signal that is provided by the spectral analysis sensor may be a combined signal that comprises sensor information that is representative for various different properties. The control unit is preferably adapted to decompose the combined sensor signal, in order to separate the sensor information for each of the different properties.

Within the emitted radiation from the surface, information is incorporated about the interaction between the laser beam and the surface to-be-cleaned. Accordingly, by measuring parameters of the emitted radiation and by analysing the obtained data, insight may be given into the cleaning process. Furthermore, process parameters of the laser beam may be adapted by the control unit during cleaning, based on the measured intensities and wavelengths of the emitted radiation.

The control unit is, in an embodiment of the device, configured to provide a warning signal when the cleaning of the surface, and the removal of the contaminants layer, would give rise to the creation of hazardous fumes. These fumes could for example be lead, zinc, and/or chrome fumes, or metal vapours in general, which are known to be dangerous or even poisonous for humans to breath. The control unit is configured to provide the warning signal upon detection of these fumes, for example upon detection thereof in the signal that is provided by the spectral analysis sensor.

The control unit may comprise a parameter database in which, for certain materials that can be cleaned with the device, suitable cleaning parameters are saved. The control unit may thereby, after an operator has selected the material to-be-cleaned, autonomously select these parameters for the material to-be-cleaned. Examples of such parameters would be an energy density of the laser beam or a laser pulse frequency.

A first portion of the emitted radiation may comprise infrared radiation. This infrared radiation is a reflection by the surface of infrared radiation from the projected laser beam. Since this infrared radiation has been reflected directly, its energy is not being used to heat up the contaminant surface layer that is to-be-cleaned, and does not contribute to the removal of the surface layer. However, the wavelength of the reflected infrared radiation is unique, being determined directly by the projected laser beam, and can be easily extracted from the spectrum of emitted radiation. Furthermore, an intensity difference between the amount of radiation that is emitted by the laser source and the amount of reflected infrared radiation may serve as a measure for the amount radiation that is absorbed by the surface.

A second portion of the emitted radiation comprises heat-induced radiation. This radiation, having a wavelength that is generally not the same as the reflected infrared radiation, is a measure of the heating of the surface under influence of the laser beam. An exothermic oxidation reaction may take place on the surface, under the influence of the laser, which may result in the emission of the heat-induced infrared radiation.

As such, the temperature of the surface may be determined as well, since the emitted radiation is dependent on the surface temperature from which the radiation has been emitted. The temperature may be monitored to prevent the substrate, and in particular non-contaminant sub-surface layers, to overheat under influence of the laser beam.

A database with threshold values for the (sub-) surface temperatures may be provided within the control unit, so that, upon selection of the material to-be-cleaned, the control unit may autonomously determine the maximum allowable surface temperature.

A third portion of the emitted radiation may be plasma light, having wavelengths within the ultraviolet regime. The wavelengths of this plasma light may be an indication if, and which, metals are being oxidized. Furthermore, for example in case the substrate material is a non-metal with a metallic contaminant layer, or vice versa, it can be observed in the plasma light whether the contaminant layer (metal) is being oxidized or whether the substrate (non-metal) is being oxidized.

A fourth portion of the emitted radiation may be light, with wavelengths in the visible regime. The wavelength spectrum of this fourth portion may give an indication of the type of elements that are being released from the surface during oxidation. Additionally, the visible light may be a measure for the thermal reactions, taking place on the surface under influence of the laser beam.

Based on the measured parameters in the spectrum of emitted radiation, the control unit may be configured to control one or more of a filing density of the back-and-forth scanning movement within the outer contour, the size of the outer contour, the amount of energy per laser pulse, the pulse frequency, the distance on the surface to-be-cleaned between consecutive laser pulses and the amount of laser pulses per unit of surface area.

The spectral analysis sensor may, in an embodiment, be configured to measure the properties in the emitted radiation spectrum inline. A real-time feed of sensor values may, during cleaning with the laser device, be provided towards the control unit, such that the control unit may control the device inline, based on the provided feedback from the sensor.

The distance sensor is configured to transmit a signal that is representative for a measured relative distance between the device and the surface. This relative distance is important in determining the focal distance of the device, since any variation in the distance between the device and the surface requires a variation in the focal distance as well, at least when an optimal cleaning effect is to be achieved by focussing a focal point of the laser on the surface.

In an embodiment, the device may comprise bot the spectral analysis sensor and the distance sensor.

In an alternative or additional embodiment, the device comprises an ultrasonic sensor. The ultrasonic sensor is configured to emit ultrasonic waves onto the surface, to measure reflected ultrasonic waves from the surface and to provide a sensor signal that is based on the emitted ultrasonic waves and the measured reflected ultrasonic waves.

The control unit is, in this embodiment, configured to compare the emitted ultrasonic waves with the reflected ultrasonic waves. From the comparison, a characteristic of the surface may be obtained or the interaction between the device and the surface may be determined. The control unit may, on the basis of the sensor signal from the ultrasonic sensor, be configured to determine the material from which the surface is made. The control unit may additionally be configured to set control values for the laser source, focal distance adjuster and beam deflector on the basis of the determined material of the surface. Preferably, the control unit comprises a database with pre-set values with the control values for various possible surface materials.

The distance sensor may be provided as a spectral analysis sensor or as an ultrasonic sensor. The control unit is preferably configured to determine the distance between the device and the surface on the basis of sensor values from both the spectral analysis sensor and the ultrasonic sensor, in order to provide for a determination of the distance with one of the sensors and to provide for a possibility to verify the determined distance with the other sensor.

The control unit is, in a further embodiment of the device, configured to control the laser source to not emit the laser beam when the device is not aimed at a surface to be cleaned. Preferably, the laser beam is not emitted when no signal is achieved from the ultrasonic sensor or when the device is aimed at a non-typical surface, for example human tissue. As such, it is prevented that the device may project a laser beam onto unintended targets, such as persons or the like.

In a further embodiment, the system comprises an acoustic sensor, which is configured to transmit a signal that is representative for an acoustic property of the interaction between the laser beam and the surface. The signal is preferably representative for the pitch and/or amplitude of the sound that is made by the interaction between the laser beam and the surface.

The control unit is, in this embodiment, configured to set control values for the laser source on the basis of the measured sound signal. The control unit is for example configured to adjust the energy density of the beam on the basis of the pitch of the measured sound. A highest possible pitch of the sound is thereby known to be an identification mark of an optimal cleaning effect.

Alternatively or additionally, the control unit is configured to set control values for the focal distance adjuster on the basis of the acoustic property. The sound of the laser beam on the surface varies when the beam is moved in and out of focus. As such, the control unit may, on the basis of this sound, control the focal distance adjuster to focus the beam. Alternatively, or additionally, the device may comprise an indicator to indicate the focal distance to an operator of the device and/or to display whether the device is correctly positioned with respect to the surface or whether it needs to be moved towards or away from the surface.

In an embodiment, the focal distance adjuster is configured to vary the focal distance of the beam, during the cleaning of the surface. In particular, this variation may be controlled by the control unit, based on a measured signal of the relative distance between the device and the surface to-be-cleaned. Thereby, the focussing may be controlled in a feedback-type of loop, which provides for more accurate cleaning of the surface.

In particular because the device is handheld, and thus prone to movement in the hands of an operator, and/or when the surface to-be-cleaned is not fully flat, such an automated focussing function ensures an improved and more efficient cleaning effort as compared to when the focal point of the beam were only to be pre-set, before the cleaning would take place.

The laser cleaning device may, in an embodiment, therefore comprise an accelerometer which is configured to transmit a signal that is representative for an orientation and/or displacement of the device. The accelerometer is thereby configured to detect movements of the device, in particular movements that are undesirably induced by the operator. The control unit is, in this embodiment, configured to set control values for the focal distance adjuster and/or the beam deflector on the basis of the signal from the accelerometer.

As such, the control unit may control the focal distance adjuster to change the focal distance of the beam. By changing the focal distance of the beam, movements of the entire device, in a direction parallel to the beam, may be compensated in order to keep the laser beam focussed on the surface.

Alternatively or additionally, the control unit may control the beam deflector, in order to change the two-dimensional pattern along which the laser beam is scanned on the surface.

In case the device is, for example, moved in one direction in its entirety and set to project a circular pattern, the beam deflector is controlled to project an ellipsoid pattern, rather than a circular pattern. This ellipsoid pattern may have a short axis of the ellipsoid parallel to the propagation direction, such that the effective pattern, formed by the combined movement of the beam with the beam deflector and of the entire device, ends up to be a circular pattern.

The controlling of the beam deflector and/or focal distance adjuster, on the basis of the accelerometer signal, provides a kind of motion-stabilizer effect. This effect allows the device to be used as a handheld device that can be manually operated by an operator, rather than as the stationary devices that are known from the prior art.

In an embodiment, the focal distance adjuster comprises, besides the mentioned movable lens element, a piezo-element. A piezo-electric material is known to deform when a voltage is applied across it. By providing a piezo-element as an actuator, being connected to the movable lens element, a position of the lens element may be changed by applying, or by taking away, a voltage across the element. Provided that a deformation direction of the piezo-element is aligned parallel to the projection direction of the beam, the piezo-element is thereby, in combination with the movable lens element, configured to adjust the focal distance of the beam.

In an embodiment, the focal distance adjuster is configured to sinusoidally vary the focal distance of the beam around the measured relative distance between the device and the surface to-be-cleaned. This sinusoidal variation, which may be any other periodic variation as well, is thereby superpositioned on the variation in focal distance that was based on the measured relative distance between the device and the surface. By sinusoidally varying the focal distance, a further waveform may be obtained, in the focal plane.

In an alternative embodiment, the sinusoidal variation may be superpositioned with a fixed focal distance, for example, when the cleaning device were to be a stationary device.

This oscillatory variation will enable the effective focal length of the device to increase. Moreover, if this periodic variation were not to be applied, the focal point would have a narrow focal depth. However, the periodic variation of the focal distance, of which an amplitude is relatively small compared to the distance between the device and the surface, will increase a root mean square (RMS) focal length, often referred to as effective focal length.

For controlling the oscillatory variation of the focal distance, piezo-element actuator may be used. The piezo-element may be deformed at a plurality of frequencies, as well as with a plurality of amplitudes. Upon command of an operator, the control unit may control the piezo-element with a specific oscillation frequency and amplitude. Furthermore, the control unit may be configured to select different values for the frequency and the amplitude a measured sensor signal from the at least one sensor.

In an alternative or additional embodiment, the control unit is configured to vary the control signals for the laser source, beam deflector and/or focal distance adjuster around the set control values. The control unit is preferably configured to vary these values on the basis of an algorithm, such as a sinusoidal function. With this varying of the control signals, it may, for example, be achieved that a three-dimensional and/or non-homogeneous surface may be cleaned better, because the control values are compensated for these variations.

In an embodiment of the device, one or more of the above features may be integrated into a single device housing. This housing allows the laser cleaning device to become relatively compact and robust. Furthermore, integration into a single housing is in particular convenient because the device is handheld, since relative alignment between individual components may be maintained and since the device may be held and operated as a whole.

The invention further provides a method for using the above-mentioned pulsed laser cleaning device, during cleaning of a surface. The method thereby comprises the steps of:
- providing, with at least one sensor, a sensor signal, representative for a parameter that is related to a characteristic of the surface,
- focussing, with a focal distance adjuster, the beam on the surface, and
- scanning, using a beam deflector, the beam along the surface in an, at least, two-dimensional pattern
- periodically varying a focal distance of the beam.

The system of the above method comprises a control unit, with which a sensor signal from the at least one sensor is received. The sensor may be a distance sensor, configured to measure a relative distance between the device and the surface and configured to transmit a signal that is representative for the measured value.

Based on the sensor signal, the control unit is configured to control the focal distance adjuster, for focussing the beam on the surface, and to control the beam deflector, for scanning the laser beam along the surface in an, at least, two-dimensional pattern.

In an embodiment, the step of scanning comprises repeating the steps of:
- describing an outer contour of the pattern, and
- describing a filling, back-and-forth scanning movement within the outer contour of the pattern.

During the cleaning of the surface, the device is configured to continuously scan the surface to-be-cleaned. During the scanning, the beam deflector is configured to alternatingly describe the outer contour with the laser beam and to describe the filing, within the outer contour.

The outer contour may be any of a circle, ellipsoid, square rectangle, or any outer contour of a two-dimensional geometrical shape. The filling, back-and-forth scanning movement may comprise a plurality of interspaced parallel lines. Alternatively however, the filling may also comprise a spirally-shaped pattern, a plurality of interspaced parallel sinusoids or a plurality of interspaced parallel spirals.

In a further embodiment, the method comprises repeating the steps of:
- measuring intensities and/or wavelengths of emitted electromagnetic radiation from the surface, and
- controlling, based on the measured intensities and/or wavelengths, one or more of:
   o a density of the filling back-and-forth scanning movement within the outer contour of the pattern;
   o an energy of a laser pulse;
   o a distance and/or time between consecutive laser pulses on the surface, and
   o an amount of laser pulses per unit of surface area.

By controlling the above parameters, the properties of the laser beam may be altered. By altering the laser beam, the interaction between the laser beam and the surface to-be-cleaned is generally altered as well. As such, the cleaning of the device may be improved, based on the measured intensities and/or wavelengths of the emitted electromagnetic radiation from the surface.

In an embodiment, the method comprises repeating the steps of:
- measuring a relative distance between the device and the surface, and
- controlling, based on the measured distance, one or more of:
   o a density of the filling back-and-forth scanning movement within the outer contour of the pattern;
   o an energy of a laser pulse;
   o a distance and/or time between consecutive laser pulses on the surface, and
   o an amount of laser pulses per unit of surface area.

It was mentioned earlier, that by controlling the above parameters, the properties of the laser beam may be altered. By altering the laser beam, the interaction between the laser beam and the surface to-be-cleaned is generally altered as well. As such, the cleaning of the device may be improved, based on the measured relative distance between the device and the surface.

In a further embodiment, the method comprises the step of sinusoidally varying a focal distance of the beam. This oscillatory variation will enable the effective focal length of the device to increase. Moreover, if this periodic variation were not to be applied, the focal point would have an infinitely small focal depth. However, the periodic variation of the focal distance, of which an amplitude is relatively small, compared to the distance between the device and the surface, will increase a root mean square (RMS) focal length, often referred to as effective focal length.

Further characteristics of the pulsed laser device according to the invention will be explained below, with reference to embodiments thereof, which are displayed in the appended drawings, in which:
Figure 1 schematically depicts an embodiment of the handheld pulsed laser device according to the invention,
Figure 2 schematically depicts the handheld pulsed laser device at least partially, upon interaction of a laser beam onto the surface,
Figures 3A - 3E schematically depict various patterns, which the handheld pulsed laser device is configured to protect onto a surface, and
Figure 4 schematically depicts the sinusoidal variation of the focal distance of the beam during scanning across the surface.

Throughout the figures, the same reference numerals are used to refer to corresponding components or to components, which have a corresponding function.

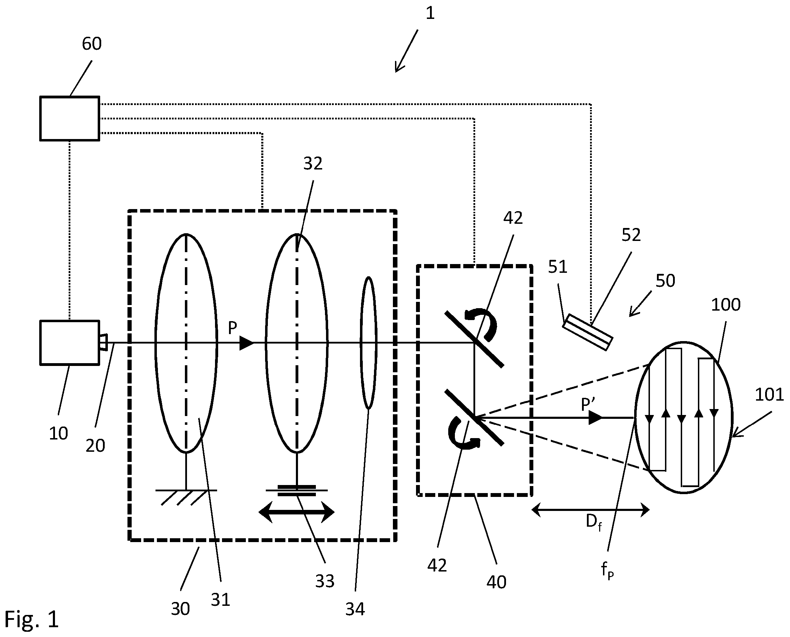

Figure 1 schematically depicts an embodiment of the handheld pulsed laser device, generally denoted by reference numeral 1. The device 1 is in particular configured to remove a contaminant surface layer from a substrate 100, for example to remove an oxide layer or organic deposits from a metal surface.

It is remarked that the representation of the device 1, throughout the figures, is schematic and that the figures are intended to provide insight into which features may be combined to achieve the technical effect of the invention.

The pulsed laser device 1 in figure 1 comprises a laser source 10, which is configured to emit a laser beam 20, which is projected away from the source 10 in a projection direction (P). In the present embodiment, the source 10 comprises optical elements and control means, such that the emitted beam 20 has an energy density that is sufficient for achieving the desired interaction between the beam 20 and a surface 101 of the substrate 100. The laser source 10 is mounted to a fixed reference frame of the device 1, onto which other components are mounted as well in order to assure a relative position between the components.

The source 10 is configured to emit both a continuous beam, as well as a pulsed laser beam 20. In particular a pulsed laser beam 20 has been found to give rise to sufficient cleaning properties of the surface 101. When projecting such a pulsed beam 20, the source 10 is configured to alternatingly intermit the projection of the beam 20, in order to achieve the pulsed behaviour. In an embodiment, the laser source 10 may have a power in between 10 and 1000 Watts, whereas a pulse-energy may be in between 1 and 100 mJ.

After the beam 20 has been emitted by the source 10, it passes through a focal distance adjuster 30 of the device 1. The focal distance adjuster 30 comprises, in the present embodiment, three optical elements, with which it is configured to change certain properties of the beam 20, as well as to adjust a focal distance (D_{F}), defined between the device 1 and the surface 101 of the substrate 100.

In the focal distance adjuster 30, the beam 20 first passes through a lens 31, which is fixed with respect to the laser source 10. The fixed lens 31 is a biconvex lens, comprising two convex outer surfaces on opposite ends, seen along the propagation direction (P). The fixed biconvex lens 31 is configured to narrow the laser beam 20, in order to achieve a converging laser bundle. Such a converging bundle is known to have a focal point, in which the laser power, per unit of projected area, is the largest. The focal point lies in front of the lens with which the beam is converged, when seen along the propagation direction.

It is understood that, in alternative embodiments, other fixed lenses may be provided to further focus the beam and to further narrow the bundle. Alternatively, the focal distance adjuster may comprise one or more biconcave lenses, which comprise two concave outer surfaces and which are configured to diverge the laser bundle.

The focal distance adjuster 30 further comprises a movable optical element 32, which is movable by means of a piezo-element 33. The movable optical element 32 is, like the fixed lens 31, a biconvex lens 32, which is movable with respect to the laser source 10 in a back-and-forth direction that is parallel to the projection direction (P) of the beam 20 through the lens 32.

The piezo-element 33 is provided between the movable lens 32 and a reference frame element that is fixedly connected to the source 10. The piezo-element 33 is configured to move the lens 32 with respect to the source 10, in the direction parallel to the projection direction (P) of the beam 20. Upon movement of the movable lens 32, a focal point (f_{P}) of the beam 20 is shifted accordingly, resulting in a change of the focal distance (D_{F}). Providing that the device 1 remains stationary with respect to the substrate 100, the position of the focal point (f_{P}) is thereby changed with respect to the substrate 100.

With the focal distance adjuster 30, the focal point (f_{P}) may be moved such, that it lies on top of the surface 101 that is to be cleaned. The energy of the beam 20, and in particular the energy density, which is the energy per unit of projected area, is concentrated on the surface 101, and the highest possible amount of energy is localized therein.

The piezo-element 33 comprises a piece of piezo-electric material, which deforms when an electric voltage is applied across it. In the present embodiment, the piezo-element 33 is fixed to the reference frame with one end thereof. The deformation of the material, under the influence of the voltage, will induce a change-in-length of the piezo-element 33. The movable lens 32 is affixed to a second end of the piezo-element 33, opposing the one end, and will be moved together with the second end upon deformation of the piezo-element 33.

By providing a piezo-element 33, the movable lens 32 may be moved relatively fast and reliably. This mainly lies in the fact that, when a piezo-element 33 is provided, virtually no other elements, such as transmissions etc., need to be provided. Furthermore, piezo-elements 33 suffer less from wear, because they lack moving parts.

In alternative embodiments, however, other types of linear actuators may be used to induce the linear back-and-forth movement of the movable lens.

The focal distance adjuster 30 further comprises an array lens 34, which is, seen along the projection direction (P), arranged behind the fixed lens 31 and the movable lens 32. The array lens 34 is configured to transform a Gaussian laser beam, having a Gaussian wavelength distribution spectrum, into a homogenous laser beam, being substantially monochromatic. The beam 20 that is generated in the source 10 does therefore not need to be monochromatic yet, since the array lens 34 may provide for such a transformation.

When the laser beam 20 has passed the focal distance adjuster 30, it is guided through the beam deflector 40, which is, seen along the projection direction (P), arranged downstream the focal distance adjuster 30.

The beam deflector 40 comprises, in the present embodiment, a first tiltable mirror 41 and a second tiltable mirror 42. The mirrors 41, 42 each comprise a reflective mirror surface and are substantially flat, so that an angle of incidence between the beam 20 and the mirror surface is the same as an angle of reflection between the beam 20 and the mirror surface. The beam deflector 40 is, by means of the mirrors 41, 42, configured to deflect the beam 20, so that the projection direction (P) of the beam 20 before entering the beam deflector 40 may differ from a projection direction (P') of the beam 20, after it has left the beam deflector 40.

It is understood that, in an alternative embodiment, the beam deflector may comprise other movable optical elements with which the beam may be deflected. For example, tiltable lenses may be provided with which the beam may be deflected and, simultaneously, be focussed.

The mirrors 41, 42 are tiltably mounted to the reference frame of the device 1. The first mirror 41 is thereby tiltable around a first axis, with respect to the frame. The second mirror 42 is tiltable around a second axis, wherein the second axis is aligned perpendicular to the first axis.

In a neutral position of both mirrors 41, 42, displayed in figure 1, the mirror surfaces of both mirrors 41, 42 are aligned anti-parallel. The angle between the mirror surface of the first mirror 41 and its angle of incidence with the beam 20 is 45°. As a result, the projection direction (P') of the beam 20, behind the beam deflector 40, is aligned parallel to the projection direction (P) in front of the beam deflector 40.

When, for example, the first mirror 41 is tilted from its neutral position, the angle of incidence between the beam 20 and the mirror surface of the first mirror 41 is changed. As a result, the angle of reflection of the beam 20 on the first mirror 41 becomes changed as well. Accordingly, the position at which the beam 20 is projected on the second mirror 42 is changed, just as the angles of incidence and reflection on the mirror surface thereof. As such, the projection direction (P') of the beam 20, behind the beam deflector 40, is changed, which ultimately results in a shift of the beam 20 along the surface 10.

In the present embodiment, the mirrors 41, 42 are each mounted to the reference frame by means of an axle that is tiltably supported in the frame. The beam deflector 40 may comprise a first actuator and a second actuator, which are, respectively, configured to induce a tilting movement to the first mirror 41 and to the second mirror 42.

In an alternative embodiment, the beam deflector may comprise a single tiltable mirror. For achieving the same, at least, two-dimensional pattern on the surface, the single mirror is, by means of two actuators, tiltable around two perpendicular axes. In a further alternative embodiment, the single mirror comprises six actuators, with which a change in the orientation of the mirror may be provided along six degrees of freedom.

Behind the beam deflector 40, the laser beam 20 emerges from the device 1, in order to be projected onto the surface 101 of the substrate 100.

The device 1 comprises two sensors 50, of which a first one is a distance sensor 51, the distance sensor 51 is directed towards the substrate 100 and is configured to transmit a signal that representative for a distance between the device 1 and the substrate 100. The distance sensor 51 is mounted to the reference frame as well, so that a relative position of the distance sensor 51 with respect to other components in the device 1 is fixed.

The distance sensor 51 is configured to measure the distance between the substrate 100 and the sensor 51 itself, which is, due to the fixed position of the sensor 51 within the device 1, a measure of the distance between the device 1 and the substrate 100.

The device 1 further comprises a control unit 60, which is electronically connected to the laser source 10, to the focal distance adjuster 30 and to the beam deflector 40. The control unit 60 is configured to control those during operational use of the device 1. The control unit 60 may further comprise a user interface, with which an operator may set parameters in the control unit 60, on the basis of which the laser source 10, the focal distance adjuster 30 and the beam deflector 40 may be controlled.

The control unit 60 is configured to set parameters for the laser source 10, such that the laser beam 20, which is emitted by the source 10, may have optimal properties for cleaning the surface 101 of the substrate 100 in a certain situation. The control unit 60 may, for example, set appropriate values for the pulse frequency or the energy density of the laser beam 20.

Additionally, the control unit 60 is configured to control the focal distance adjuster 30, such that the focal point (f_{P}) of the beam 20 is projected on the surface 101 of the substrate 100.

Furthermore, the focal distance adjuster 40 is configured to apply, upon control by the control unit 60, an oscillatory variation on the movable lens 32. The oscillatory variation is a variation of the position of the movable lens 32 along the projection direction (P). Similar as to during the setting of the focal distance, the oscillatory variation is induced by actuation of the piezo-element 33, upon deformation thereof.

The control unit 60 is further configured to control the beam deflector 40, in order to project the pattern on the surface 101. Based on parameter values, which may be set in the control unit 60 by an operator, the control unit 60 may select appropriate values for the shape of the projected pattern, for the scanning frequency or for a distance between adjacent laser pulses on the surface 101.

Additionally, the control unit 60 is electronically connected to the distance sensor 51. The distance sensor 51 is thereby configured to transmit the signal, representative for the distance between the device 1 and the surface 101, towards the control unit 60.

Based on the signal from the distance sensor 51, the control unit 60 may, for example further control the focal distance adjuster 30 in case a set value for the focal distance in the focal distance adjuster 30 does not correspond to the measured focal distance (D_{F}). The control unit is thereby configured to calculate a difference between the set and the measured focal distance and may control the focal distance adjuster 30 to minimize this difference.

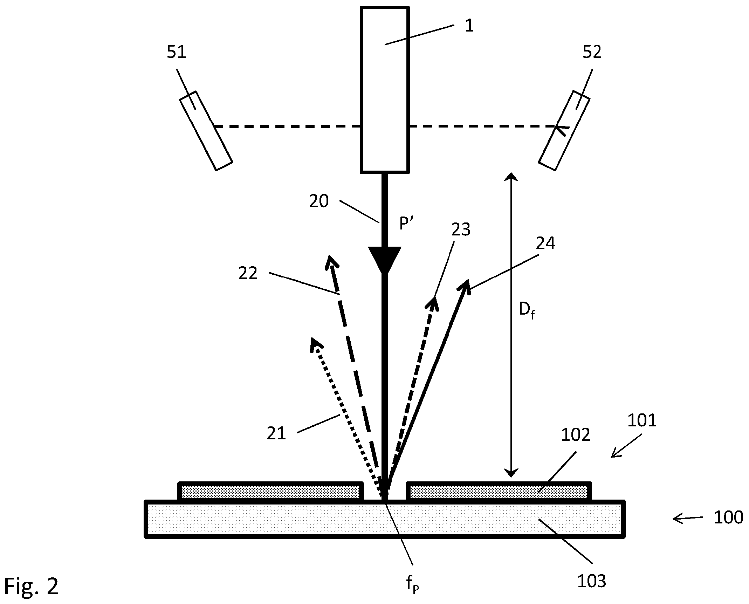

Further reference is made to figure 2, in which the embodiment of the device 1 is displayed as well, comprising the distance sensor 51 and a spectral analysis sensor 52. The distance sensor 51 and the spectral analysis sensor 52 are both directed towards the surface 101 of the substrate 100 and are both electrically connected to the control unit 60, which is arranged within the device 1.

During cleaning of the surface 101 with the device 1, the laser beam 20 is projected onto the surface 101 in order to vaporize and/or to oxidize a top layer 102 on the surface 101. The device 1, and in particular the control unit 60 of the device 1, is thereby configured to control laser parameters such, that a sub-surface layer 103 of the substrate 100 is kept intact.

When the laser beam 20 is scanned along the surface 101, radiation is emitted back from the surface 101. With the spectral analysis sensor 52, the emitted radiation may be measured and a wavelength distribution of the emitted radiation may be constructed by the control unit 60.in the distribution, the measured intensity of radiation is displayed, for certain wavelength ranges.

The emitted radiation comprises a first portion, which is radiation that is reflected back from the surface as infrared radiation 21. The infrared radiation 21 directly originates from the laser beam 20, since no interaction has taken place between the surface 101 and the beam 20, other than reflection. A wavelength of the infrared radiation 21 therefor corresponds to a wavelength of the laser beam 20.

A second portion of the emitted radiation comprises heat-induced radiation 22, which is radiation that is emitted from the surface 101 due to heating thereof.

A third portion of the emitted radiation comprises plasma light 23, of which a wavelength and intensity are representative for the type of metal that is being oxidized during the cleaning. If for example the top layer 102, an organic contaminant, is being oxidized, the wavelength profile will differ from when, for example, an iron sub-surface layer 103 is being oxidized.

A fourth portion of the emitted radiation comprises visible light 24, of which the intensity and wavelength profile are representative for the type of oxidized elements as well.

The control unit 60 is configured to further control the laser source 10, focal distance adjuster 30 and the beam deflector 40 on the basis of the intensities and wavelength profiles, which are being measured by the spectral analysis sensor 52. For example, when the intensity of the heat-induced radiation 22 becomes too high, the control unit 60 may determine to decrease the energy density of the laser beam 20, in order to prevent substantial heating of the sub-surface layer 103.

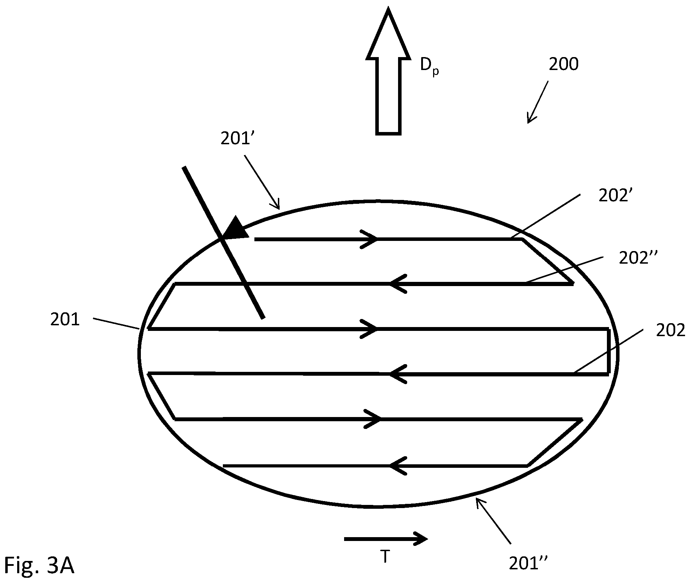

In figures 3A - 3E, a projected pattern of the laser beam from the pulsed laser device 1 onto the surface is displayed, with a viewing direction from above, normal the surface. The pattern is repeatedly projected on the surface, until an operator may decide to stop operation of the device 1.

Besides the scanning movement of the beam to form the pattern, the laser device 1 may be moved in its entirety as well, for example by an operator. In particular with this handheld device, the operator may guide the projected pattern along the surface by inducing a relative movement between the device 1 and the surface. For the projected patterns in figures 3A - 3E, a relative movement between the device 1 and the surface is in a direction of propagation (Dₚ).

In figure 3A, a first projected pattern 200 is displayed. During the scanning of the pattern 200, first, an ellipsoid outer contour 201 is described on the surface. Thereafter, the outer contour 201 is filled with a back-and-forth scanning movement. During the back-and-forth scanning movement, the beam is configured to describe a plurality of linear passes 202 across the surface. The linear passes 202 are aligned perpendicular to the direction of propagation (Dₚ) and extend in between lines of the outer contour 201, across substantially the entire width of the outer contour 201.

After describing the outer contour 201, the laser beam is deflected towards a top portion 201' of the outer contour 201, in order to start filling thereof with linear passes 202. When a first linear pass 202' has been described by the laser in a transverse direction (T), the beam is moved along the surface, parallel to the direction of propagation (Dₚ). Then, the beam is deflected to describe a second linear pass 202", in a direction opposing the transverse direction (T). This shifting between consecutive linear passes 202 is repeated until a bottom portion 201" of the outer contour 201 has been reached. Then, another outer contour is described and the scanning is repeated.

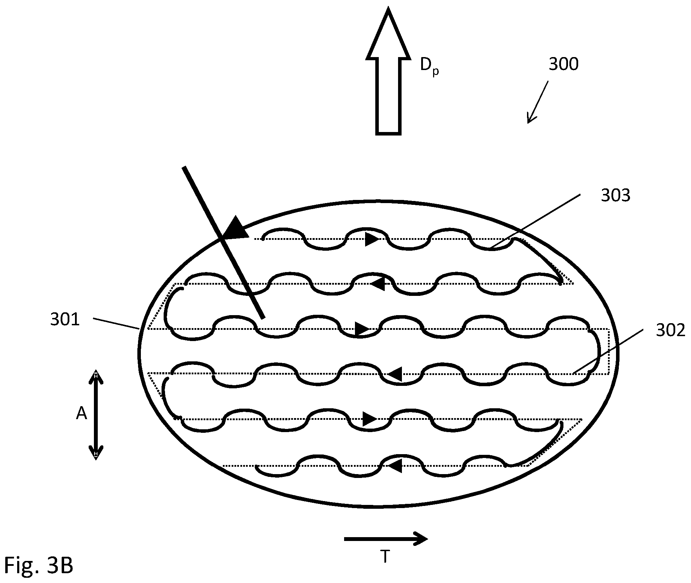

In figure 3B, a second projected pattern 300 is displayed, for which, first, an outer contour 301 is projected onto the surface with the laser beam. After the outer contour 301 has been projected, it is filled with linear passes 302 by means of a back-and-forth scanning movement of the laser beam as well.

However, the linear passes 302 are superpositioned with a sinusoidal pattern 303, which is projected by means of an oscillatory movement of the beam in an amplitude direction (A), parallel to the direction of propagation (Dₚ). By superpositioning the linear passes 302 with the sinusoidal pattern 303, ripple stresses may be induced in the contaminate layer that is to be removed from the surface. These ripple stresses are induced by temperature gradients within the contaminant layer, which may give rise to local thermal expansion and thermal contraction and will induce buckling of the surface layer. As such, the sinusoidal pattern 303 may give rise to improved cleaning properties.

It is understood that, instead of a sinusoidal pattern, other wave-like patterns may be superpositioned with the linear passes as well in order to obtain the improved cleaning effect.

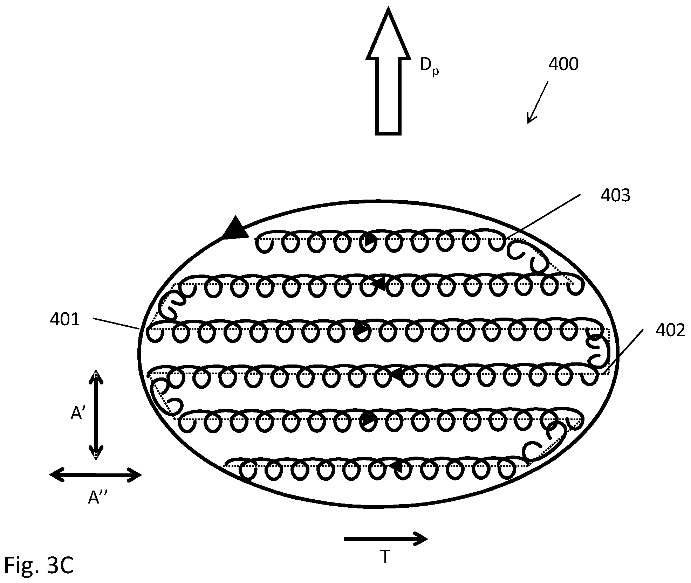

In figure 3C, a third projected pattern 400 is displayed. Similar to the second projected pattern 300, an outer contour 401 is described by the laser beam, which is filled with a back-and-forth scanning movement of the beam to describe linear passes 402. Opposed to the second projected pattern 300, in the third projected pattern 400, the linear passes 402 are superpositioned with a spiral pattern 403. The spiral pattern 403 is projected by an oscillatory movement of the beam in two amplitude directions (A', A").

Preferably, the two amplitude directions (A', A") are aligned perpendicular to each other. In the projected pattern 400 in figure 3C, a first amplitude direction (A') is aligned parallel to the direction of propagation (Dₚ), whereas a second amplitude direction (A") is aligned parallel to the transverse direction (T), perpendicular to the first amplitude direction (A') and perpendicular to the direction of propagation (Dₚ).

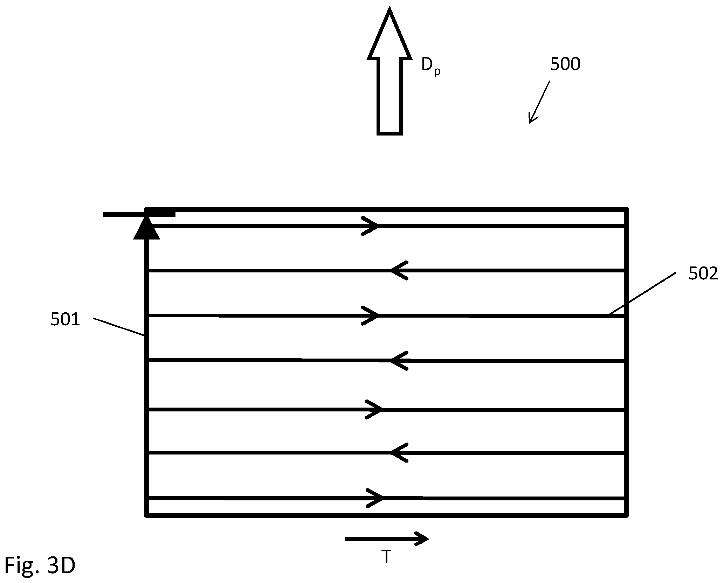

In figure 3D, a fourth projected pattern 500 is displayed. The fourth projected pattern 500 is similar to the first projected pattern 100 that is displayed in figure 3A, but comprises an outer contour 501 with a rectangular shape. Two of the four projected lines, that form the rectangular outer contour 501, are thereby aligned parallel to the direction of propagation (Dₚ), whereas two other lines of the rectangular outer contour 501 are aligned parallel to the transverse direction (T).

By projecting a rectangular outer contour 501, filled with linear passes 502, the advantage is provided that the beam needs to be deflected along only one direction, of the direction of propagation (Dₚ) and the transverse direction (T), at the same time. With, for example, an ellipsoid outer contour, simultaneous deflection of the beam along both the direction of propagation (Dₚ) and the transverse direction (T) is needed, which may require more advanced actuators of the beam deflector or more complex controlling software in the control unit.

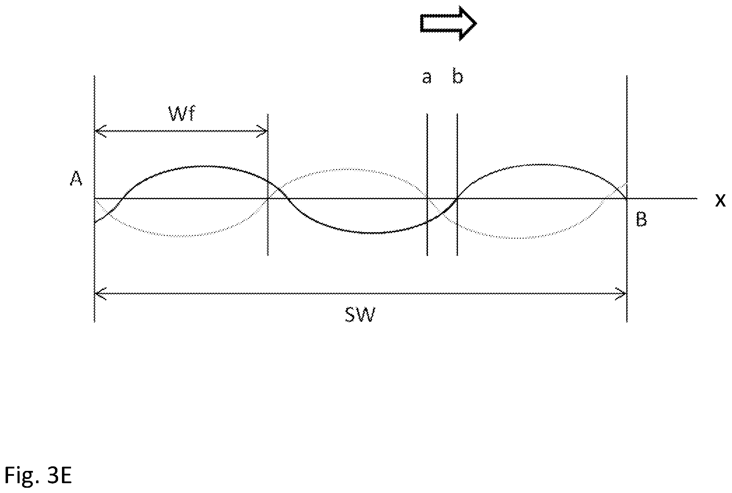

In figure 3E, a projected pattern of the laser beam on the surface is displayed. The laser beam is guided by the beam deflector to describe a back and forth scanning movement over a scanning width (SW). The scanning movement comprises a first sinusoidal pass (A), which propagates in a first direction, and a second sinusoidal pass (B), which propagates in a second direction that opposes the first direction.

The first sinusoidal (A) and the second sinusoidal (B) have a half wavelength (Wf) and the scanning width (SW) is set to be not equal to an exact plurality of the half wavelength (Wf). It is therefore achieved that the first sinusoid (A) is out of phase with the second sinusoid (B). A spiral-like waveform may thereby be created which propagates in the first and/or second direction. This can be seen in figure 3E, in which it is displayed that the first sinusoidal pass (A) intersects the propagation axis (x) at a first intersection point (a), whereas the second sinusoidal pass (B) intersects the propagation axis (x) at a second intersection point (b), wherein the second intersection point (b) does not fall together with the first intersection point (a).

As such, it is achieved that knot points of the pattern, in which subsequent first and second scanning passes (A, B) intersect, are not present at a fixed location on the surface, but that these knot points move along the surface, which is indicated by the arrow in figure 3E. By moving the knot points, with their relatively high energy density, along the surface, the energy input into the surface is spread better, which allows the cleaning effect to be more even and better spread over the surface.

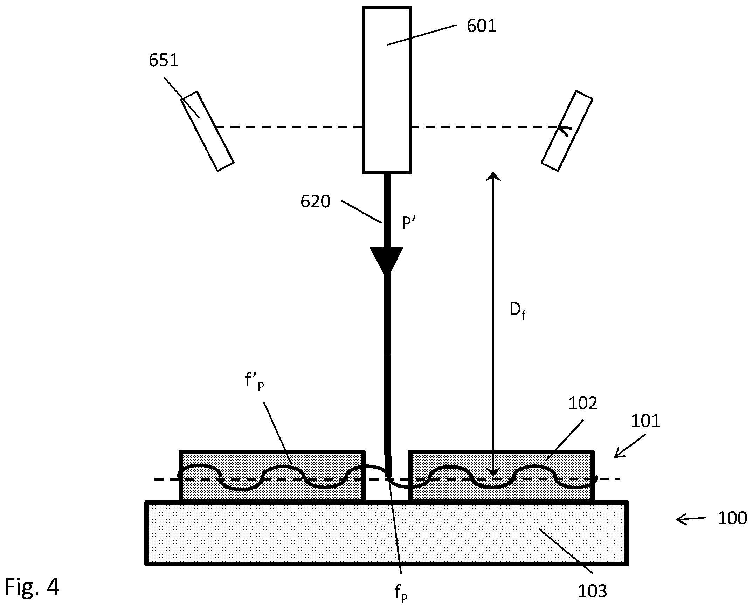

In figure 4, the device 601 is displayed in an operative condition, projecting a laser beam 620 on a surface 101 of a substrate 100 to-be-cleaned, in order to remove a contaminant top layer 102 from a sub-surface layer 103.

The focal distance (D_{f}) of the beam 620 is, by a focal distance adjuster in the device 601, adjusted such that a focal point (fₚ) of the beam 620 lies on the surface 101. The device 601 is, by means of a distance sensor 651, configured to measure a relative distance between the device 601 and the surface 101, and configured to adjust the focal distance (D_{f}), based on the measured relative distance.

During scanning of the beam 620 across the surface 101, the device 601 is configured to sinusoidally vary the focal distance (D_{f}) of the beam 620, as is displayed in figure 4 by a sinusoidally variable focal point (f'ₚ). The focal distance adjuster is thereby configured to periodically vary the focal distance (D_{f}), wherein an amplitude of this variation, parallel to a projection direction (P') of the beam 620, is relatively small compared to the focal distance (D_{f}).

By periodically varying the focal distance (D_{f}), an effective focal length of the device 601 may be increased. This may result therein that disturbances in the position of the device 601, relative to the surface 101, do not substantially influence the working of the laser. A certain amount of movement of the device 601, in hands of the operator, becomes allowable, while the cleaning of the surface 101 by the device 601 remains sufficient

## Claims

1. A handheld pulsed laser device (1, 601) for cleaning or treating a surface (101), comprising:
- a laser source (10), configured to emit a pulsed laser beam (20),
- a focal distance adjuster (30), configured to change a focal distance (D_{f}) of the beam, and
- a beam deflector (40), configured to deflect the beam to scan the beam along the surface,
- at least one sensor, configured to provide a sensor signal, representative for a parameter that is related to a characteristic of the surface, **characterized in that**, the device further comprises:
- a control unit (60), configured to control the beam deflector to scan the beam along the surface in an, at least, two-dimensional pattern (200, 300, 400, 500), based on the sensor signal,
wherein, during cleaning or treating of the surface, the focal distance adjuster is configured to periodically vary, upon control by the control unit (60), the focal distance of the beam around a measured relative distance between the device and the surface.

2. Pulsed laser device according to claim 1, wherein the pattern of the beam comprises an outer contour (201, 301, 401, 501) and wherein the outer contour is filled-up by the beam with a back-and-forth scanning movement within the outer contour.

3. Pulsed laser device according to claim 2, wherein the back-and-forth scanning movement is superpositioned with a sinusoidal pattern (303).

4. Pulsed laser device according to claim 2, wherein the back-and-forth scanning movement is superpositioned with a spiral pattern (403).

5. Pulsed laser device according to any of the preceding claims, wherein the beam deflector comprises at least one mirror (41, 42), which is tiltable around at least one perpendicular axis.

6. Pulsed laser device according to any of the preceding claims, wherein the focal distance adjuster comprises a movable lens element (32) and a piezo-element (33), which is configured to move the movable lens element to adjust the focal distance of the beam.

7. Pulsed laser device according to any of the preceding claims, wherein the at least one sensor is a spectral analysis sensor (52), configured to provide a signal that is representative for intensities and/or wavelengths of emitted electromagnetic radiation from the surface.

8. Pulsed laser device according to any of the claims 1 - 6, wherein the at least one sensor is a distance sensor (51, 651), configured to transmit a signal that is representative for the measured relative distance between the device and the surface.

9. Pulsed laser device according to any of the preceding claims, comprising an accelerometer, which is configured to transmit a signal that is representative for an orientation and/or displacement of the device.

10. Pulsed laser device according to any of the preceding claims, wherein the focal distance adjuster is configured to sinusoidally vary the focal distance of the beam around the measured relative distance.

11. Method for using the handheld pulsed laser cleaning device (1, 601) according to any of the preceding claims, during cleaning or treating of a surface (101), comprising the steps of:
- providing, with a sensor, a sensor signal, representative for a parameter that is related to a characteristic of the surface,
- focussing, with a focal distance adjuster (30), the beam on the surface, and
- scanning, using a beam deflector (40), the beam along the surface in an, at least, two-dimensional pattern (200, 300, 400, 500),
- periodically varying a focal distance (D_{f}) of the beam.

12. Method according to claim 11, wherein the step of scanning comprises repeating the steps of:
- describing an outer contour (201, 301, 401, 501) of the pattern, and
- describing a filling, back-and-forth scanning movement within the outer contour of the pattern.

13. Method according to claim 11 or 12, comprising repeating the steps of:
- measuring intensities and/or wavelengths of emitted electromagnetic radiation from the surface, and
- controlling, based on the measured intensities and/or wavelengths, one or more of:
o a density of the filling back-and-forth scanning movement within the outer contour of the pattern;
o an energy of a laser pulse;
o a distance and/or time between consecutive laser pulses on the surface, and
∘ an amount of laser pulses per unit of surface area.

14. Method according to any of the claims 11 - 13, comprising repeating the steps of:
- measuring a relative distance between the device and the surface, and
- controlling, based on the measured distance, one or more of:
o a density of the filling back-and-forth scanning movement within the outer contour of the pattern;
o an energy of a laser pulse;
o a distance and/or time between consecutive laser pulses on the surface, and
∘ an amount of laser pulses per unit of surface area.

15. Method according to any of the claims 11 - 14, comprising the step of sinusoidally varying the focal distance (D_{f}) of the beam.

## Patentansprüche

1. Handgehaltene Pulslaservorrichtung (1, 601) zum Reinigen oder Behandeln einer Oberfläche (101), Folgendes umfassend:
- eine Laserquelle (10), die dazu ausgelegt ist, einen gepulsten Laserstrahl (20) zu emittieren,
- einen Brennweitenregler (30), der konfiguriert ist, um eine Brennweite (D_{f}) des Strahls zu ändern, und
- einen Strahlablenker (40), der dazu ausgelegt ist, den Strahl abzulenken, um die Oberfläche mit dem Strahl abzutasten,
- mindestens einen Sensor, der dazu ausgelegt ist, ein Sensorsignal bereitzustellen, das für einen Parameter repräsentativ ist, der sich auf eine Charakteristik der Oberfläche bezieht, **dadurch gekennzeichnet, dass** die Vorrichtung ferner Folgendes umfasst:
- eine Steuereinheit (60), die dazu ausgelegt ist, den Strahlablenker zu steuern, um die Oberfläche mit dem Strahl in einem mindestens zweidimensionalen Muster (200, 300, 400, 500), basierend auf dem Sensorsignal, abzutasten,
wobei während des Reinigens oder Behandelns der Oberfläche der Brennweitenregler dazu ausgelegt ist, bei Steuerung durch die Steuereinheit (60) periodisch die Brennweite des Strahls um einen gemessenen relativen Abstand zwischen der Vorrichtung und der Oberfläche zu variieren.

2. Pulslaservorrichtung nach Anspruch 1, wobei das Muster des Strahls eine Außenkontur (201, 301, 401, 501) umfasst, und wobei die Außenkontur durch den Strahl mit einer hin und her gehenden Abtastbewegung innerhalb der Außenkontur aufgefüllt wird.

3. Pulslaservorrichtung nach Anspruch 2, wobei die hin und her gehende Abtastbewegung mit einem sinusförmigen Muster (303) überlagert ist.

4. Pulslaservorrichtung nach Anspruch 2, wobei die hin und her gehende Abtastbewegung mit einem Spiralmuster (403) überlagert ist.

5. Pulslaservorrichtung nach einem der vorhergehenden Ansprüche, wobei der Strahlablenker mindestens einen Spiegel (41, 42) umfasst, der um mindestens eine senkrechte Achse kippbar ist.

6. Pulslaservorrichtung nach einem der vorhergehenden Ansprüche, wobei der Brennweitenregler ein bewegliches Linsenelement (32) und ein Piezoelement (33) umfasst, das dazu ausgelegt ist, das bewegbare Linsenelement zu bewegen, um die Brennweite des Strahls einzustellen.

7. Pulslaservorrichtung nach einem der vorhergehenden Ansprüche, wobei der mindestens eine Sensor ein Spektralanalysesensor (52) ist, der dazu ausgelegt ist, ein Signal bereitzustellen, das für Intensitäten und/oder Wellenlängen von emittierter elektromagnetischer Strahlung von der Oberfläche repräsentativ ist.

8. Pulslaservorrichtung nach einem der Ansprüche 1 - 6, wobei der mindestens eine Sensor ein Abstandssensor (51, 651) ist, der dazu ausgelegt ist, ein Signal zu übertragen, das für den gemessenen relativen Abstand zwischen der Vorrichtung und der Oberfläche repräsentativ ist.

9. Pulslaservorrichtung nach einem der vorhergehenden Ansprüche, die einen Beschleunigungsmesser umfasst, der dazu ausgelegt ist, ein Signal zu übertragen, das für eine Orientierung und/oder Verschiebung der Vorrichtung repräsentativ ist.

10. Pulslaservorrichtung nach einem der vorhergehenden Ansprüche, wobei der Brennweitenregler dazu ausgelegt ist, die Brennweite des Strahls um den gemessenen relativen Abstand herum sinusförmig zu variieren.

11. Verfahren zum Verwenden der handgehaltenen Pulslaservorrichtung (1, 601) nach einem der vorhergehenden Ansprüche während des Reinigens oder Behandelns einer Oberfläche (101), die folgenden Schritte umfassend:
- Bereitstellen, mit einem Sensor, eines Sensorsignals, das für einen Parameter repräsentativ ist, der sich auf eine Eigenschaft der Oberfläche bezieht,
- Fokussieren, mit einem Brennweitenregler (30), des Strahls auf der Oberfläche, und
- Abtasten, unter Verwendung eines Strahlablenkers (40), der Oberfläche mit dem Strahl in einem zumindest zweidimensionalen Muster (200, 300, 400, 500).
- periodisches Variieren einer Brennweite (D_{f}) des Strahls.

12. Verfahren nach Anspruch 11, wobei der Schritt des Abtastens das Wiederholen der folgenden Schritte umfasst:
- Beschreiben einer Außenkontur (201, 301, 401, 501) des Musters, und
- Beschreiben einer füllenden hin und her gehenden Abtastbewegung innerhalb der Außenkontur des Musters.

13. Verfahren nach Anspruch 11 oder 12, umfassend das Wiederholen der folgenden Schritte:
- Messen der Intensitäten und/oder Wellenlängen der von der Oberfläche emittierten elektromagnetischen Strahlung und
- Steuern, basierend auf den gemessenen Intensitäten und/oder Wellenlängen, von einem oder mehreren der Folgenden:
o einer Dichte der füllenden hin und her gehenden Abtastbewegung innerhalb der Außenkontur des Musters;
o einer Energie eines Laserpulses;
o eines Abstands und/oder einer Zeit zwischen aufeinanderfolgenden Laserpulsen auf der Oberfläche, und
o einer Menge an Laserpulsen pro Einheit der Oberfläche.

14. Verfahren nach einem der Ansprüche 11 - 13, umfassend das Wiederholen der folgenden Schritte:
- Messen eines relativen Abstands zwischen der Vorrichtung und der Oberfläche, und
- Steuern, basierend auf dem gemessenen Abstand, von einem oder mehreren der Folgenden:
o einer Dichte der füllenden hin und her gehenden Abtastbewegung innerhalb der Außenkontur des Musters;
o einer Energie eines Laserpulses;
o eines Abstands und/oder einer Zeit zwischen aufeinanderfolgenden Laserpulsen auf der Oberfläche, und
o einer Menge an Laserpulsen pro Einheit der Oberfläche.

15. Verfahren nach einem der Ansprüche 11 - 14, umfassend den Schritt des sinusförmigen Variierens der Brennweite (D_{f}) des Strahls.

## Revendications

1. Dispositif à laser pulsé portatif (1, 601) pour nettoyer ou traiter une surface (101), comprenant :
- une source laser (10), configurée pour émettre un faisceau laser pulsé (20),
- un dispositif de réglage de la distance focale (30), configuré pour modifier la distance focale (D_{f}) du faisceau, et
- un déflecteur de faisceau (40), configuré pour dévier le faisceau afin de le balayer le long de la surface,
- au moins un capteur, configuré pour fournir un signal de capteur, représentatif d'un paramètre lié à une caractéristique de la surface, **caractérisé en ce que** le dispositif comprend en outre :
- une unité de commande (60), configurée pour commander le déflecteur de faisceau afin de balayer le faisceau le long de la surface selon un motif au moins bidimensionnel (200, 300, 400, 500), sur la base du signal du capteur,
où, pendant le nettoyage ou le traitement de la surface, le dispositif de réglage de la distance focale est configuré pour faire varier périodiquement, sous le contrôle de l'unité de commande (60), la distance focale du faisceau autour d'une distance relative mesurée entre le dispositif et la surface.

2. Dispositif à laser pulsé selon la revendication 1, dans lequel le motif du faisceau comprend un contour extérieur (201, 301, 401, 501) et dans lequel le contour extérieur est rempli par le faisceau avec un mouvement de balayage de va-et-vient à l'intérieur du contour extérieur.

3. Dispositif à laser pulsé selon la revendication 2, dans lequel le mouvement de balayage de va-et-vient est superposé à un motif sinusoïdal (303).

4. Dispositif à laser pulsé selon la revendication 2, dans lequel le mouvement de balayage de va-et-vient est superposé à un motif en spirale (403).

5. Dispositif à laser pulsé selon l'une quelconque des revendications précédentes, dans lequel le déflecteur de faisceau comprend au moins un miroir (41, 42), qui peut être incliné autour d'au moins un axe perpendiculaire.

6. Dispositif à laser pulsé selon l'une quelconque des revendications précédentes, dans lequel le dispositif de réglage de la distance focale comprend un élément de lentille mobile (32) et un élément piézoélectrique (33), qui est configuré pour déplacer l'élément de lentille mobile afin de régler la distance focale du faisceau.

7. Dispositif à laser pulsé selon l'une quelconque des revendications précédentes, dans lequel l'au moins un capteur est un capteur d'analyse spectrale (52), configuré pour fournir un signal représentatif des intensités et/ou des longueurs d'ondes du rayonnement électromagnétique émis par la surface.

8. Dispositif à laser pulsé selon l'une quelconque des revendications 1 à 6, dans lequel l'au moins un capteur est un capteur de distance (51, 651), configuré pour transmettre un signal qui est représentatif de la distance relative mesurée entre le dispositif et la surface.

9. Dispositif à laser pulsé selon l'une quelconque des revendications précédentes, comprenant un accéléromètre, qui est configuré pour transmettre un signal qui est représentatif d'une orientation et/ou d'un déplacement du dispositif.

10. Dispositif à laser pulsé selon l'une quelconque des revendications précédentes, dans lequel le dispositif de réglage de la distance focale est configuré pour faire varier de manière sinusoïdale la distance focale du faisceau autour de la distance relative mesurée.

11. Procédé d'utilisation du dispositif de nettoyage à laser pulsé portatif (1, 601) selon l'une quelconque des revendications précédentes, pendant le nettoyage ou le traitement d'une surface (101), le procédé comprenant les étapes suivantes :
- fournir, avec un capteur, un signal de capteur, représentatif d'un paramètre qui est lié à une caractéristique de la surface,
- focaliser, avec un dispositif de réglage de la distance focale (30), le faisceau sur la surface, et
- balayer, à l'aide d'un déflecteur de faisceau (40), le faisceau le long de la surface selon un motif au moins bidimensionnel (200, 300, 400, 500),
- faire varier périodiquement une distance focale (D_{f}) du faisceau.

12. Procédé selon la revendication 11, dans lequel l'étape de balayage comprend la répétition des étapes suivantes :
- décrire un contour extérieur (201, 301, 401, 501) du motif, et
- décrire un mouvement de balayage en va-et-vient de remplissage à l'intérieur du contour extérieur du motif.

13. Procédé selon la revendication 11 ou la revendication 12, comprenant la répétition des étapes suivantes :
- mesurer les intensités et/ou les longueurs d'ondes du rayonnement électromagnétique émis par la surface, et
- contrôler, sur la base des intensités et/ou longueurs d'ondes mesurées, une ou plusieurs des grandeurs suivantes :
o une densité du mouvement de balayage en va-et-vient de remplissage à l'intérieur du contour extérieur du motif ;
o une énergie d'une impulsion laser ;
o une distance et/ou un temps entre des impulsions laser consécutives sur la surface, et
o une quantité d'impulsions laser par unité de surface.

14. Procédé selon l'une quelconque des revendications 11 à 13, comprenant la répétition des étapes suivantes :
- mesurer une distance relative entre le dispositif et la surface, et
- contrôler, en fonction de la distance mesurée, un ou plusieurs des éléments suivants :
o une densité du mouvement de balayage en va-et-vient de remplissage à l'intérieur du contour extérieur du motif ;
o une énergie d'une impulsion laser ;
o une distance et/ou un temps entre des impulsions laser consécutives sur la surface, et
o une quantité d'impulsions laser par unité de surface.

15. Procédé selon l'une quelconque des revendications 11 à 14, comprenant l'étape comprenant de faire varier de manière sinusoïdale la distance focale (D_{f}) du faisceau.
